# EUROPEAN PATENT APPLICATION

(11) **EP 4 432 401 A1**
(43) Date of publication of application: **18.09.2024**
(21) Application number: 22911591.0
(22) Date of filing: 01.11.2022
(51) Int. Cl.: H01M 4/62, H01M 4/13, C01B 32/174

(54) **CONDUCTIVE AGENT SLURRY FOR SECONDARY BATTERY ELECTRODE, SECONDARY BATTERY ELECTRODE INCLUDING SAME, AND SECONDARY BATTERY**

(30) Priority: 23.12.2021 KR 20210186382
(71) Applicant: Dongjin Semichem Co., Ltd., Incheon 22824 (KR)
(72) Inventor: HAN, Jukyung, Seongnam-si Gyeonggi-do 13486 (KR); HUH, Chul, Seongnam-si Gyeonggi-do 13486 (KR); YANG, Hwi Chan, Seongnam-si Gyeonggi-do 13486 (KR); LEE, Joocheol, Seongnam-si Gyeonggi-do 13486 (KR); KIM, Hyeongcheol, Seongnam-si Gyeonggi-do 13486 (KR)
(74) Representative: Grünecker Patent- und Rechtsanwälte PartG mbB
(86) International application number: PCT/KR2022/016907
(87) International publication number: WO 2023/120953

(57) **Abstract**

Provided is a conductive material slurry for a secondary battery electrode, which has low viscosity and low sheet resistance. The conductive material slurry for a secondary battery electrode according to the present disclosure comprises a conductive material and a dispersant that disperses the conductive material, wherein the dispersant comprises a cellulose compound and a conductive polymer, and the amount of the conductive material is more than 0 wt% and 2.5 wt% or less based on the total weight of the conductive material slurry for a secondary battery electrode.

## Description

### [Technical Field]

The present disclosure relates to a conductive material slurry for a secondary battery electrode, a secondary battery electrode including the same, and a secondary battery, and more specifically, a conductive material slurry for a secondary battery electrode with a small average particle size while having low viscosity and low sheet resistance, a secondary battery electrode including the same, and a secondary battery.

### [Background Art]

In accordance with the rapid development of the electronics, communication, and computer industries, electric vehicles, mobile phones, laptop computers, *etc.* are making remarkable progress, and high energy density and stable output of batteries are required as a power source to drive portable electronic devices. In particular, lithium secondary batteries are being most actively developed as high-performance batteries with the highest energy density among currently commercialized secondary batteries.

First, the conductive material is a material which is used to easily move electrons between an electrode active material and another electrode active material or between an electrode active material and a current collector and is being developed mainly focusing on carbon-based materials. The conductive material slurry is a solution in which such a conductive material is dispersed in a solvent, and it becomes a material constituting an electrode slurry together with an electrode active material and a binder at a later stage. As secondary batteries have recently entered the medium and large-sized battery market, such as electric vehicles and an energy storage system (ESS), their importance is increasing, and studies on the increase of theoretical capacity are in progress.

The anode of a commercially available lithium secondary battery is graphite, and graphite having a layered structure shows excellent cycle characteristics. Since the potential when lithium ions are inserted into graphite is close to the equilibrium potential of lithium, there is no particular difference in the output voltage compared to when a lithium metal is used. However, the commonly known theoretical capacity is 372 mAh/g, which has the limit of electric capacity.

Therefore, as an anode material having high specific capacity and excellent cycle performance, silicon-based materials are expected as a next-generation electrode that can replace a graphite-based anode. Silicon, which has the highest theoretical capacity (4,200 mAh/g) as an anode material for lithium secondary batteries, has advantages in that it has a low potential difference with lithium, is environmentally friendly, and has abundant reserves. However, since silicon is an insulator, it has a disadvantage in that it is unfavorable in terms of durability and thus causes the electric capacity to decrease. In order to overcome this disadvantage, the need to improve the conductivity of the silicon active material or the need for a conductive material has been highlighted.

Among them, carbon nanotubes (CNTs) are rapidly emerging as a main material for conductive materials. Carbon nanotubes have a nano-sized diameter and a cylindrical shape, in which carbon atoms are arranged in a spiral shape, and have an sp² bonding structure. Based on such structure, carbon nanotubes have received attention as a material with excellent physical properties, such as excellent electrical properties, strength, resilience, and thermal conductivity, and are being studied as new materials in various fields.

As a conductive material for secondary batteries, carbon nanotubes can increase energy density and improve lifespan compared to carbon in the existing powder form, and can also reduce the size of batteries. In particular, these advantages can act as a greater advantage in batteries for electric vehicles that require high capacity, rapid charging/discharging, *etc.*

However, despite the excellent advantages, carbon nanotubes are indicated as having a serious problem in that they have low solubility and dispersibility. In particular, carbon nanotubes exist in a bundle or agglomerate structure in a solution due to strong Van-der Waals attraction. Therefore, the necessity and importance of a technology for dispersing these carbon nanotubes is increasing in the development of a conductive material slurry.

There are two major conventional techniques for dispersing carbon nanotubes in a solvent. The first technique is to increase water dispersibility by acid-treatment of the surface of the carbon nanotubes. However, although this technique can increase the dispersibility in a solvent, it has a problem in that electrical conductivity is reduced due to the generation of a defect on the surface. The second technique is to add a surfactant in the carbon nanotubes and disperse them in a solvent. This technique may be efficient in preparing a low-content carbon nanotube slurry, but it has a problem in that when the content of carbon nanotubes increases, a surfactant that exceeds the content of carbon nanotubes must be added, thereby resulting in an increase in viscosity and a decrease in electrical conductivity.

### [Disclosure]

### [Technical Problem]

In order to solve the above problems, an object of the present disclosure is to provide a conductive material slurry for a secondary battery electrode having low viscosity and low sheet resistance by using a cellulose-based compound and a conductive polymer as a dispersant for dispersing the conductive material.

Another object of the present disclosure is to provide a conductive material slurry for a secondary battery electrode having a small average particle size.

Still another object of the present disclosure is to use a cellulose-based compound and a conductive polymer as a dispersant for dispersing the conductive material so as to reduce the number of high-pressure dispersions in the process of preparing a conductive material slurry for a secondary battery electrode, thereby providing a conductive material slurry for the secondary battery electrode with reduced manufacturing time.

Still another object of the present disclosure is to provide a secondary battery electrode which includes a conductive material slurry for the secondary battery electrode.

Still another object of the present disclosure is to provide a secondary battery including the secondary battery electrode.

The objects of the present disclosure are not limited to those mentioned above, and other objects and advantages of the present disclosure not mentioned above can be understood by the following description and will be more clearly understood by the examples of the present disclosure. Additionally, it will also be readily apparent that the objects and advantages of the present disclosure may be realized by the means and combinations thereof indicated in the claims.

### [Technical Solution]

A conductive material slurry for a secondary battery electrode according to an embodiment of the present disclosure for achieving the above objects includes a conductive material and a dispersant for dispersing the conductive material. The dispersant includes a cellulose-based compound and a conductive polymer. The content of the conductive material is more than 0 wt% and 2.5 wt% or less based on the total weight of the conductive material slurry for a secondary battery electrode.

A secondary battery electrode according to another embodiment of the present disclosure for achieving the above objects includes an electrode active material, a conductive material, and a dispersant. The dispersant includes a cellulose-based compound and a conductive polymer. The content of the conductive material is more than 0 wt% and 2.5 wt% or less based on the total weight of the conductive material slurry for a secondary battery electrode.

According to another aspect of the present disclosure, it is possible to provide a secondary battery electrode which includes an electrode active material; a conductive material; and a dispersant; wherein the dispersant includes a cellulose-based compound and a conductive polymer, and wherein the content of the conductive material is 28 wt% or more and 67 wt% or less based on the total weight of the conductive material and the dispersant.

A secondary battery according to another embodiment of the present disclosure for achieving the above object includes the secondary battery electrode.

### [Advantageous Effects]

According to one aspect of the present disclosure, it is possible to provide a conductive material slurry for a secondary battery electrode having the effects of low viscosity and low sheet resistance by sufficiently dispersing a conductive material having low solubility and low dispersibility in the slurry for a secondary battery electrode. Additionally, according to another aspect of the present disclosure, the manufacturing time can be shortened by reducing the number of high-pressure dispersions in the process of manufacturing the conductive material slurry for a secondary battery electrode.

In addition to the above effects, specific effects of the present disclosure will be described together while describing specific details for carrying out the present disclosure.

### [Description of Drawings]

FIG. 1 is a diagram showing the chemical formula of PEDOT:PSS, which is one of the conductive polymers applicable to a conductive material slurry for a secondary battery electrode according to an embodiment of the present disclosure.
FIG. 2 is a cross-sectional view showing a secondary battery according to an embodiment of the present disclosure.

### [Mode for Disclosure]

Hereinafter, each of the constitutions of the present disclosure will be described in detail so that those skilled in the art can easily practice the same, but these are merely exemplary embodiments, and the scope of rights of the present disclosure is not limited thereto.

The conductive material slurry for a secondary battery electrode according to the present disclosure includes a conductive material and a dispersant for dispersing the conductive material, and the dispersant includes a cellulose-based compound and a conductive polymer.

Hereinafter, the constitutions of the present disclosure will be described in more detail.

### 1. Conductive material slurry for secondary battery electrodes

The conductive material slurry for a secondary battery electrode according to the present disclosure includes a conductive material and a dispersant for dispersing the conductive material.

The conductive material according to the present disclosure can supplement the conductivity of the active material in the cathode or anode of a secondary battery. Specifically, the conductive material is a material forming a path through which electrons can move, and it may be a carbon-based material having excellent electrical conductivity.

The conductive material according to the present disclosure may be any one selected from the group consisting of graphene, a single-walled carbon nanotube (SWCNT), a multi-walled carbon nanotube (MWCNT), and a combination thereof, and more specifically, it may be any one selected from the group consisting of graphene, a single-walled carbon nanotube, and a combination thereof. The graphene is a two-dimensional single layer separated from graphite in which carbon layers having hexagonal rings are stacked, and may have a thickness of 0.2 nm to 5.0 nm. The single-walled carbon nanotube is a linear carbon body and connects an electrode active material with an electrode active material or an electrode active material with a current collector at a distance much longer than a powder, and can significantly contribute to improving conductivity by easily forming a network structure.

The single-walled carbon nanotube, which is generally used as a conductive material for secondary batteries, may have a thickness of, for example, 1 nm to 2 nm, and a length of 2 µm to 50 µm, and a BET specific surface area corresponding to 300 m²/g or more. For this reason, the conventional single-walled carbon nanotubes had a problem in that they form an agglomerate in the conductive material slurry for a secondary battery electrode thus making it difficult to disperse them in a solvent. In order to solve the difficulty of dispersibility at once, the dispersant according to the present disclosure can include a cellulose-based compound and a conductive polymer.

The cellulose-based compound according to the present disclosure may be any one selected from the group consisting of cellulose, carboxymethylcellulose, a sodium salt of carboxymethylcellulose, hydroxyethylcellulose, and a potassium salt of carboxymethylcellulose, and specifically, a sodium salt of carboxymethylcellulose.

The cellulose-based compound may commonly include a glucose ring molecular structure and a substituent in an equatorial direction bound to the glucose ring. Specifically, the glucose ring molecular structure exhibits hydrophobicity and can bind to the surface of the conductive material, and the substituent in the equatorial direction includes a hydrophilic functional group and thus can have a hydrogen bonding with water. In particular, when the substituent in the equatorial direction of the cellulose-based compound is a hydroxy group, it may show a form being packed by a hydrogen bonding with the hydroxy group bonded to a glucose ring of another cellulose-based compound. Therefore, since the cellulose-based compound has a rigid property, it may be used as a dispersion stabilizer for conductive materials, and specifically, as a dispersion stabilizer for carbon nanotubes.

The degree of etherification (DE) of the cellulose-based compound according to the present disclosure may be in the range of 0.6 to 1.2, specifically 0.6 to 1.0, and more specifically 0.7 to 0.9. The degree of etherification means the degree in which three -OR groups present in one repeating unit in the cellulose-based compound are substituted with ether groups.

When only the cellulose-based compound is used as a dispersant, there is a problem in that the viscosity of the slurry of a conductive material for a secondary battery electrode becomes excessively high and the sheet resistance becomes relatively high. In order to solve this problem, the present disclosure uses both the cellulose-based compound and the conductive polymer as a dispersant.

The conductive polymer according to an embodiment of the present disclosure may be any one selected from the group consisting of a polypyrrole-based compound, a polythiophene-based compound, a polyphenylene sulfide-based compound, and a polyaniline-based compound. Specifically, the conductive polymer is a polymer compound having electrical conductivity at a level similar to that of a metal conductor by including a conjugation structure, and can exhibit high electrical conductivity by doping the polymer with an electron acceptor or electron donor. For example, the weight average molecular weight of the conductive polymer may be 50,000 g/mol to 200,000 g/mol, specifically 70,000 g/mol to 150,000 g/mol, and more specifically 90,000 g/mol to 130,000 g/mol. However, the technical spirit of the present disclosure is not limited to the weight average molecular weight of the conductive polymer.

The conductive polymer according to another embodiment of the present disclosure may include a first ionomer and a second ionomer, and specifically may be a mixture of the first ionomer and the second ionomer. The first ionomer may be different from the second ionomer.

Specifically, the first ionomer may be a polymer compound including a ring molecular structure conjugated with repeating units, and the second ionomer may be a polymer compound including a cation exchange group. The first ionomer may exhibit electrical conductivity by including a conjugated ring molecular structure.

More specifically, the first ionomer may be any one selected from the group consisting of a polypyrrole-based compound, a polythiophene-based compound, a polyphenylene sulfide-based compound, and a polyaniline-based compound. The cation exchange group of the second ionomer may be any one selected from the group consisting of a sulfonic acid group, a carboxyl group, a hydroxy group, and a combination thereof.

In the first ionomer, the conjugated ring molecular structure exhibits a positive charge, and in the second ionomer, hydrogen ions of the cation exchange group are removed to exhibit a negative charge. The first ionomer having these characteristics can increase the electrical conductivity of the conductive material slurry for a secondary battery electrode, and the second ionomer can realize low viscosity of the conductive material slurry for the secondary battery electrode by combining a cation exchange group with water.

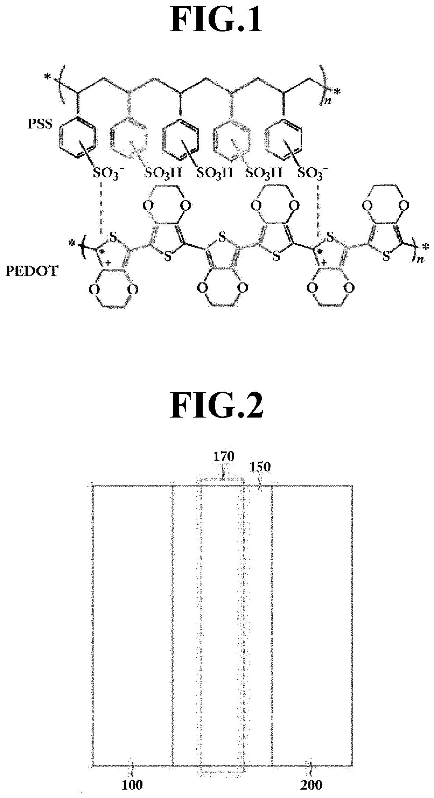

Hereinafter, for the convenience of description, it will be described with reference to FIG. 1.

FIG. 1 is a diagram showing the chemical formula of PEDOT:PSS, which is one of the conductive polymers applicable to a conductive material slurry for a secondary battery electrode according to an embodiment of the present disclosure.

Referring to FIG. 1, it can be seen that PEDOT(poly(3,4-ethylenedioxythiophene)) corresponding to the first ionomer has a positive charge due to the conjugated polythiophene structure, and it can be seen that PSS(poly(styrenesulfonate)) corresponding to the second ionomer has a negative charge due to the removal of hydrogen ions from the sulfonic acid group. The conjugated polythiophene structure can increase electrical conductivity of the conductive material slurry for a secondary battery electrode, and the sulfonic acid group can combine with water (solvent) to lower the viscosity of the conductive material slurry for a secondary battery electrode.

When the conductive polymer is used alone as a dispersant, there is a problem in that the viscosity of the slurry of the conductive material for a secondary battery electrode becomes excessively high. In order to solve this problem, the present disclosure uses both the cellulose-based compound and the conductive polymer as dispersants.

The weight ratio (conductive material: dispersant) of the conductive material and the dispersant according to the present disclosure may be 1:1 to 1:2, and specifically 1: 1.5 to 1:2. When the weight of the dispersant is out of the above numerical range based on the weight of the conductive material, an aggregate structure is formed in the conductive material slurry for a secondary battery electrode due to the strong van der Waals attraction of the conductive material, thereby resulting in a rapid increase of viscosity.

The cellulose-based compound according to the present disclosure may include a first cellulose-based compound having a weight average molecular weight of 400,000 g/mol or less. Specifically, the weight average molecular weight of the first cellulose-based compound may be more than 100,000 g/mol and 400,000 g/mol or less, and more specifically, 100,000 g/mol to 200,000 g/mol. When the first cellulose-based compound having a weight average molecular weight of 400,000 g/mol or less is used, it is possible to reduce the viscosity of the conductive material slurry for a secondary battery electrode and easily improve the dispersibility of the conductive material.

The weight ratio of the first cellulose-based compound and the conductive polymer (first cellulose-based compound: conductive polymer) may be 1:0.25 to 1:2, specifically 1: 1 to 1: 2, and more specifically 1: 1.5 to 1:2. When the weight ratio of the first cellulose-based compound and the conductive polymer is out of the above numerical range, at least one of the viscosity and sheet resistance of the conductive material slurry for a secondary battery electrode may increase rapidly.

The cellulose-based compound according to the present disclosure may include a second cellulose-based compound having a weight average molecular weight of 100,000 g/mol or less. The weight average molecular weight of the second cellulose-based compound may be specifically 10,000 g/mol to 100,000 g/mol, and more specifically 50,000 g/mol to 90,000 g/mol.

As the weight average molecular weight of the cellulose-based compound becomes small, it has advantages in that the conductive material can be better dispersed in the solvent, and the viscosity of the conductive material slurry can be lowered.

The weight ratio of the second cellulose-based compound and the conductive polymer (second cellulose-based compound: conductive polymer) may be 1: 0.25 to 1: 2, specifically 1: 1 to 1: 2, and more specifically 1: 1.5 to 1:2. When the weight ratio of the second cellulose-based compound and the conductive polymer is out of the above numerical range, at least one of the viscosity and sheet resistance of the conductive material slurry for a secondary battery electrode may increase rapidly.

The conductive material slurry for a secondary battery electrode according to the present disclosure may further include a solvent that is mixed with the conductive material and the dispersant. The solvent may include an aqueous solvent, and more specifically may include water.

The content of the conductive material according to the present disclosure may be more than 0 wt% and 2.5 wt% or less, specifically 0.5 wt% to 2 wt%, and more specifically 0.5 to 1.5 wt% based on the total weight of the conductive material slurry for a secondary battery electrode. When the content of the conductive material is less than the above numerical range, the conductivity of the electrode active material in the secondary battery may not be supplemented, whereas when the content of the conductive material exceeds the above numerical range, the dispersibility of the conductive material in the solvent may be deteriorated.

### 2. Secondary battery electrode

A secondary battery electrode according to another embodiment of the present disclosure includes an electrode active material, a conductive material, and a dispersant. The dispersant includes a cellulose-based compound and a conductive polymer. The aforementioned parts and repeated descriptions are briefly described or omitted.

The electrode active material according to the present disclosure may be any one selected from the group consisting of natural graphite, artificial graphite, expanded graphite, carbon fiber, carbon black, a carbon nanotube, fullerene, activated carbon, a silicon particle, silicon oxide, a silicon alloy, a metal compound, a metal-carbon composite, and a lithium-containing nitride. In this specification, the metal-carbon composite is defined as a compound in which a cluster or thin film layer of a metal or metal oxide is formed on the surface of a carbon active material, and a lithium-including nitride is defined as a nitride including lithium.

The cellulose-based compound may be any one selected from the group consisting of cellulose, carboxymethylcellulose, a sodium salt of carboxymethylcellulose, hydroxyethylcellulose, and a potassium salt of carboxymethylcellulose.

The conductive polymer may include a first ionomer and a second ionomer, and specifically may be a mixture of the first ionomer and the second ionomer, and the first ionomer may be different from the second ionomer.

The secondary battery electrode according to another embodiment of the present disclosure may further include a binder which serves to bind the electrode active material and the conductive material to a metal current collector.

The binder according to the present disclosure may correspond to any one selected from the group consisting of a vinylidene fluoride/hexafluoropropylene copolymer, polyvinylidene fluoride, polyacrylonitrile, polymethyl methacrylate, polytetrafluoroethylene, styrene-butadiene rubber, and a mixture thereof. However, the technical spirit of the present disclosure is not limited thereto, and any material combining the conductive material and the electrode active material may be applicable.

Meanwhile, carboxymethyl cellulose, which is added as a binder in order to supplement the low viscosity characteristic of the styrene-butadiene rubber, has the characteristic in that it has a very high molecular weight by having a weight average molecular weight of about 1,500,000 g/mol, unlike the cellulose-based compound according to the present disclosure. Therefore, the cellulose-based compound used as a binder is different from the cellulose-based compound according to the present disclosure in terms of purpose, use, *etc.*

The secondary battery electrode according to the present disclosure may be manufactured by applying the slurry for a secondary battery electrode on a substrate and performing a drying process or annealing process therefor. The substrate may correspond to, for example, an anode current collector.

### 3. Secondary battery

Another embodiment of the present disclosure is a secondary battery including the secondary battery electrode.

FIG. 2 is a cross-sectional view showing a secondary battery according to an embodiment of the present disclosure.

Referring to FIG. 2, the secondary battery according to an embodiment of the present disclosure may include a cathode 100 and an anode 200 spaced apart from each other and an electrolyte 150 provided therebetween for the movement of ions. Between the cathode 100 and the anode 200, a separator 170 may be further provided to allow the movement of the electrolyte 150 or the movement of ions through the electrolyte 150 while physically separating these electrodes. In some cases, the separator 170 may not be provided.

The cathode 100 may include a predetermined electrode material for the cathode. The cathode 100 may include a cathode active material, a first binder, and a first conductive material. The cathode active material, the first binder, and the first conductive material may constitute one cathode active material layer (or a mixture). The cathode 100 may be provided with a cathode current collector bound to the cathode active material layer. In this case, the cathode active material layer may be disposed between the cathode current collector and the electrolyte 150.

The anode 200 may include a predetermined electrode material for the anode. The anode 200 may include an anode active material, a second binder, and a second conductive material. The anode active material, the second binder, and the second conductive material may constitute one anode active material layer (or a mixture). The anode 200 may be provided with an anode current collector bound to the anode active material layer. In this case, the anode active material layer may be disposed between the anode current collector and the electrolyte 150.

At least one of the cathode 100 and the anode 200 may be manufactured by applying the conductive material slurry for a secondary battery electrode according to an embodiment of the present disclosure. A secondary battery according to an embodiment of the present disclosure may be, for example, a lithium secondary battery, but may also be other batteries.

Hereinafter, embodiments of the present disclosure will be described in detail so that those skilled in the art can easily practice the same, but these are merely embodiments, and the scope of the present disclosure is not limited by the following.

### [Preparation Example 1: Preparation of SWCNT slurry]

Conductive material slurries for a secondary battery electrode including the compositions according to Table 1 were prepared.

After adding 950 g of distilled water into a round bottom flask, 50 g of CMC was added thereto, and the mixture was stirred at room temperature for 2 hours to prepare a 5 wt% CMC aqueous solution. SWCNT, the CMC aqueous solution, a conductive polymer (excluding Comparative Examples 1 and 2), and distilled water were added into a beaker and stirred at 1,000 rpm for 60 minutes using a high-speed stirrer to prepare 500 g of a pre-dispersed SWCNT solution. The prepared pre-dispersed SWCNT solution was added into a high-pressure disperser (MN400BF, Micronox) and was subjected to high-pressure dispersion at 700 bar and 5 pass (impossible for Comparative Examples 1 to 7) to finally prepare a SWCNT slurry.

Meanwhile, in Tables 1, 3, 5, 7, and 9, the remaining content is defined by distilled water.

**[Table 1]**

| Sample (Unit: wt%) | SWCNT | CMC¹⁾ | CMC²⁾ | CMC³⁾ | PEDOT:PSS⁴⁾ | Dispersant Ratio (% relative to CNT) | PEDOT: PSS Ratio (% relative to CMC) |
|---|---|---|---|---|---|---|---|
| Compara tive Example 1 | 2.5 | 3.75 | 0 | 0 | 0 | 150 | - |
| Compara tive Example 2 | 2.5 | 0 | 3.75 | 0 | 0 | 150 | - |
| Compara tive Example 3 | 2.5 | 0 | 0 | 0 | 3.75 | 150 | - |
| Compara tive Example 4 | 2.7 | 0 | 2.025 | 0 | 2.025 | 150 | 100 |
| Compara tive Example 5 | 2.7 | 0 | 1.35 | 0 | 2.7 | 150 | 200 |
| Compara tive Example 6 | 2.7 | 2.025 | 0 | 0 | 2.025 | 150 | 100 |
| Compara tive Example 7 | 2.7 | 1.35 | 0 | 0 | 2.7 | 150 | 200 |
| Example 1 | 0.1 | 0 | 0.075 | 0 | 0.075 | 150 | 100 |
| Example 2 | 0.1 | 0.075 | 0 | 0 | 0.075 | 150 | 100 |
| Example 3 | 0.5 | 0 | 0.375 | 0 | 0.375 | 150 | 100 |
| Example 4 | 0.5 | 0.375 | 0 | 0 | 0.375 | 150 | 100 |
| Example 5 | 0.5 | 0 | 0 | 0.375 | 0.375 | 150 | 100 |
| Example 6 | 1 | 0 | 0.75 | 0 | 0.75 | 150 | 100 |
| Example 7 | 1 | 0.75 | 0 | 0 | 0.75 | 150 | 100 |
| Example 8 | 1 | 0 | 0 | 0.75 | 0.75 | 150 | 100 |
| Example 9 | 1.5 | 0 | 1.125 | 0 | 1.125 | 150 | 100 |
| Example 10 | 1.5 | 1.125 | 0 | 0 | 1.125 | 150 | 100 |
| Example 11 | 1.5 | 0 | 0 | 1.125 | 1.125 | 150 | 100 |
| Example 12 | 1.5 | 0 | 0.9 | 0 | 1.35 | 150 | 150 |
| 1) CMC with a weight average molecular weight of more than 100,000 g/mol and 400,000 g/mol or less | | | | | | | |
| 2) CMC with a weight average molecular weight of 100,000 g/mol or less | | | | | | | |
| 3) CMC with a weight average molecular weight more than 400,000 g/mol | | | | | | | |
| 4) a polymer, in which PEDOT and PSS are mixed in a 1:2 weight ratio and which has a weight average molecular weight of 100,000 g/mol | | | | | | | |
| In this specification, the above items 1) to 4) are defined as being identical in the tables below. | | | | | | | |

### [Experimental Example: Evaluation of Conductive Material Slurry for Secondary Battery Electrode]

In this specification, the viscosity of the conductive material slurry for a secondary battery electrode and the sheet resistance of the film prepared from the slurry were evaluated by the following method.

### 1) Viscosity

Viscosity is a value measured at Cone 2, Φ40 mm, 50 s⁻¹, and 23°C using an HR-2 Viscometer (TA Instruments).

### 2) Sheet Resistance

After coating the conductive material slurry for a secondary battery electrode according to the preparation example on a bare film using an applicator, it was dried in an oven at 90°C. The sheet resistance was the measured value of a dried film (Film; specimen size: 10 cm × 15 cm) having a thickness of 7 µm using a 4-point probe equipment (MCP-T700).

**[Table 2].**

| Sample | Viscosity (cP) | Sheet Resistance (Ω/sq) |
|---|---|---|
| Comparative Example 1 | Unable to proceed with Pass | - |
| Comparative Example 2 | Unable to proceed with Pass | - |
| Comparative Example 3 | Unable to proceed with Pass | - |
| Comparative Example 4 | Unable to proceed with Pass | - |
| Comparative Example 5 | Unable to proceed with Pass | - |
| Comparative Example 6 | Unable to proceed with Pass | - |
| Comparative Example 7 | Unable to proceed with Pass | - |
| Example 1 | 120 | 1.36 |
| Example 2 | 300 | 1.52 |
| Example 3 | 360 | 1.32 |
| Example 4 | 510 | 1.50 |
| Example 5 | 830 | 2.10 |
| Example 6 | 1,020 | 1.33 |
| Example 7 | 1,400 | 1.54 |
| Example 8 | 1,850 | 2.06 |
| Example 9 | 1,310 | 1.34 |
| Example 10 | 1,730 | 1.55 |
| Example 11 | 2,330 | 2.10 |
| Example 12 | 1,200 | 1.21 |

Referring to Comparative Examples 1 to 3 in Table 2, it was confirmed that when only one type of CMC or only one type of conductive polymer was used as a dispersant, it was impossible to go through with the Pass progress due to the excessively high viscosity of the conductive material slurry. Referring to Comparative Examples 4 to 7, it was confirmed that even if a conductive polymer and CMC were used as a dispersant, when the content of SWCNT exceeded 2.5 wt%, the viscosity of the conductive material slurry was excessively high; therefore, it was impossible to go through with the Pass progress.

Examples 1 to 12 are examples when the content of SWCNT is in the range of 0.1 wt% to 1.5 wt%. Referring to the trends of Examples 1 and 2, Examples 3 to 5, Examples 6 to 8, and Examples 9 to 11, it can be confirmed that the conductive material slurries using CMC having a weight average molecular weight of 100,000 g/mol or less could realize lower viscosity and low sheet resistance of the film, compared to the conductive material slurries using CMC having a different weight average molecular weight.

**[Table 3]**

| Sample (Unit: wt%) | SWCNT | CMC¹⁾ | CMC²⁾ | CMC³⁾ | PEDOT:PS S⁴⁾ | Dispersan t Ratio (% relative to CNT) | PEDOT: PSS Ratio (% relative to CMC) |
|---|---|---|---|---|---|---|---|
| Example 13 | 2.5 | 0 | 3.2608 | 0 | 0.4892 | 150 | 15 |
| Example 14 | 2.5 | 0 | 3 | 0 | 0.75 | 150 | 25 |
| Example 15 | 2.5 | 0 | 1.875 | 0 | 1.875 | 150 | 100 |
| Example 16 | 2.5 | 0 | 1.5 | 0 | 2.25 | 150 | 150 |
| Example 17 | 2.5 | 0 | 1.25 | 0 | 2.5 | 150 | 200 |
| Example 18 | 2.5 | 0 | 1.0714 | 0 | 2.6786 | 150 | 250 |
| Example 19 | 2.5 | 0 | 3.125 | 0 | 3.125 | 250 | 100 |
| Example 20 | 2.5 | 0 | 2.5 | 0 | 2.5 | 200 | 100 |
| Example 21 | 2.5 | 0 | 1.25 | 0 | 1.25 | 100 | 100 |
| Example 22 | 2.5 | 0 | 0.625 | 0 | 0.625 | 50 | 100 |
| Example 23 | 2.5 | 3.2608 | 0 | 0 | 0.4892 | 150 | 15 |
| Example 24 | 2.5 | 3 | 0 | 0 | 0.75 | 150 | 25 |
| Example 25 | 2.5 | 1.875 | 0 | 0 | 1.875 | 150 | 100 |
| Example 26 | 2.5 | 1.5 | 0 | 0 | 2.25 | 150 | 150 |
| Example 27 | 2.5 | 1.25 | 0 | 0 | 2.5 | 150 | 200 |
| Example 28 | 2.5 | 1.0714 | 0 | 0 | 2.6786 | 150 | 250 |
| Example 29 | 2.5 | 3.125 | 0 | 0 | 3.125 | 250 | 100 |
| Example 30 | 2.5 | 2.5 | 0 | 0 | 2.5 | 200 | 100 |
| Example 31 | 2.5 | 1.25 | 0 | 0 | 1.25 | 100 | 100 |
| Example 32 | 2.5 | 0.625 | 0 | 0 | 0.625 | 50 | 100 |

**[Table 4]**

| Sample | Viscosity (cP) | Sheet Resistance (Ω/sq) |
|---|---|---|
| Example 13 | 2,850 | 1.78 |
| Example 14 | 2,440 | 1.50 |
| Example 15 | 1,910 | 1.34 |
| Example 16 | 1,820 | 1.22 |
| Example 17 | 1,700 | 1.20 |
| Example 18 | 2,300 | 1.44 |
| Example 19 | 2,000 | 2.00 |
| Example 20 | 1,650 | 1.32 |
| Example 21 | 2,060 | 1.35 |
| Example 22 | 3,000 | 1.76 |
| Example 23 | 3,060 | 2.00 |
| Example 24 | 2,900 | 1.73 |
| Example 25 | 2,680 | 1.57 |
| Example 26 | 2,600 | 1.44 |
| Example 27 | 2,540 | 1.33 |
| Example 28 | 2,880 | 1.61 |
| Example 29 | 2,700 | 2.26 |
| Example 30 | 2,580 | 1.50 |
| Example 31 | 2,600 | 1.45 |
| Example 32 | 3,400 | 1.95 |

Referring to Examples 13 to 18 in which the content of SWCNT is 2.5 wt% based on the total weight of the conductive material slurry in Tables 3 and 4, it can be confirmed that when the weight ratio of CMC having a weight average molecular weight of 100,000 g/mol or less and the conductive polymer (CMC:conductive polymer) is in the range of 1:0.25 to 1:2, the low viscosity of the optimized conductive material slurry and the low sheet resistance of the film can be realized.

Referring to Examples 19 to 22 including CMC having a weight average molecular weight of 100,000 g/mol or less in Tables 3 and 4, it can be confirmed that as the weight ratio of CNT and dispersant (CNT:dispersant) approaches closer to 1:1 to 1:2, the low viscosity of the optimized conductive material slurry and the low sheet resistance of the film can be realized.

Referring to Examples 23 to 28 in Tables 3 and 4, it can be confirmed that when the weight ratio of CMC, which has a weight average molecular weight of more than 100,000 g/mol and 400,000 g/mol or less, and a conductive polymer (CMC:conductive polymer) is in the range of 1 :0.25 to 1:2, the low viscosity of the optimized conductive material slurry and the low sheet resistance of the film can be realized.

Referring to Examples 29 to 32 in Tables 3 and 4, it can be seen that the viscosities of the conductive material slurry and the sheet resistance of the film become lowest when the weight ratio of CNT to dispersant (CNT:dispersant) is in the range of 1:1 to 1:2.

**[Table 5]**

| Sample (Unit: wt%) | SWCNT | CMC¹⁾ | CMC²⁾ | CMC³⁾ | PEDOT:PS S⁴⁾ | Dispersant Ratio (% relative to CNT) | PEDOT: PSS Ratio (% relative to CMC) |
|---|---|---|---|---|---|---|---|
| Example 33 | 2.5 | 0 | 0 | 3.2608 | 0.4892 | 150 | 15 |
| Example 34 | 2.5 | 0 | 0 | 3 | 0.75 | 150 | 25 |
| Example 35 | 2.5 | 0 | 0 | 1.875 | 1.875 | 150 | 100 |
| Example 36 | 2.5 | 0 | 0 | 1.25 | 2.5 | 150 | 200 |
| Example 37 | 2.5 | 0 | 0 | 1.0714 | 2.6786 | 150 | 250 |
| Example 38 | 2.5 | 0 | 0 | 3.125 | 3.125 | 250 | 100 |
| Example 39 | 2.5 | 0 | 0 | 2.5 | 2.5 | 200 | 100 |
| Example 40 | 2.5 | 0 | 0 | 1.25 | 1.25 | 100 | 100 |
| Example 41 | 2.5 | 0 | 0 | 0.625 | 0.625 | 50 | 100 |

**[Table 6]**

| Sample | Viscosity (cP) | Sheet Resistance (Ω/sq) |
|---|---|---|
| Example 33 | 3,400 | 3.00 |
| Example 34 | 3,250 | 2.43 |
| Example 35 | 3,030 | 2.05 |
| Example 36 | 2,870 | 1.87 |
| Example 37 | 3,080 | 2.38 |
| Example 38 | 3,210 | 2.87 |
| Example 39 | 2,990 | 2.20 |
| Example 40 | 3,080 | 1.97 |
| Example 41 | 3,900 | 2.65 |

Referring to Examples 33 to 41 in Tables 5 and 6, it was confirmed that when CMC having a weight average molecular weight of more than 400,000 g/mol is used, the viscosity of the conductive material slurry and the sheet resistance of the film were excessively increased.

Referring to Examples 33 to 37 in Tables 5 and 6, it was confirmed that although the viscosity and sheet resistance were high, as the weight ratio of CMC having a weight average molecular weight exceeding 400,000 g/mol and the conductive polymer (CMC:conductive polymer) was approaching closer to 1:0.25 to 1:0.25, the low viscosity of the conductive material slurry and the low sheet resistance of the film could be realized. Referring to Examples 38 to 41, it can be confirmed that the low viscosity of the conductive material slurry and the low sheet resistance of the film are implemented within the range where the weight ratio of CNT to a dispersant (CNT:dispersant) is 1: 1 to 1 :2.

Upon review of the trends of Tables 1 to 6, it is possible to derive that the conductive material slurry using CMC of 400,000 g/mol or less realize a relatively low viscosity and sheet resistance of the film compared to the conductive material slurry using CMC with a different molecular weight range.

### [Preparation Example 2: Preparation of graphene slurry]

After adding 950 g of distilled water into a round bottom flask, 50 g of CMC was added thereto, and the mixture was stirred at room temperature for 2 hours to prepare a 5 wt% CMC aqueous solution. Graphene, the CMC aqueous solution, a conductive polymer (excluding Comparative Examples 8 and 9), and distilled water were added into a beaker and stirred at 1,000 rpm for 60 minutes using a high-speed stirrer to prepare 500 g of a pre-dispersed graphene solution. The prepared pre-dispersed graphene solution was added into a high-pressure disperser (MN400BF, Micronox), and was subjected to high-pressure dispersion at 700 bar and 5 pass (impossible for Comparative Examples 8 to 14) to finally prepare a graphene slurry.

**[Table 7]**

| Sample (Unit: wt%) | Graphene | CMC¹⁾ | CMC²⁾ | CMC³⁾ | PEDOT:PSS⁴⁾ | Dispersant Ratio (% relative to Graphene) | PEDOT: PSS Ratio (% relative to CMC) |
|---|---|---|---|---|---|---|---|
| Comparati ve Example 8 | 2.5 | 3.75 | 0 | 0 | 0 | 150 | - |
| Comparati ve Example 9 | 2.5 | 0 | 3.75 | 0 | 0 | 150 | - |
| Comparati ve Example 10 | 2.5 | 0 | 0 | 0 | 3.75 | 150 | - |
| Comparati ve Example 11 | 2.7 | 0 | 2.025 | 0 | 2.025 | 150 | 100 |
| Comparati ve Example 12 | 2.7 | 0 | 1.35 | 0 | 2.7 | 150 | 200 |
| Comparati ve Example 13 | 2.7 | 2.025 | 0 | 0 | 2.025 | 150 | 100 |
| Comparati ve Example 14 | 2.7 | 1.35 | 0 | 0 | 2.7 | 150 | 200 |
| Example 42 | 0.1 | 0 | 0.075 | 0 | 0.075 | 150 | 100 |
| Example 43 | 0.1 | 0.075 | 0 | 0 | 0.075 | 150 | 100 |
| Example 44 | 0.5 | 0 | 0.375 | 0 | 0.375 | 150 | 100 |
| Example 45 | 0.5 | 0.375 | 0 | 0 | 0.375 | 150 | 100 |
| Example 46 | 0.5 | 0 | 0 | 0.375 | 0.375 | 150 | 100 |
| Example 47 | 1 | 0 | 0.75 | 0 | 0.75 | 150 | 100 |
| Example 48 | 1 | 0.75 | 0 | 0 | 0.75 | 150 | 100 |
| Example 49 | 1 | 0 | 0 | 0.75 | 0.75 | 150 | 100 |
| Example 50 | 1.5 | 0 | 1.125 | 0 | 1.125 | 150 | 100 |
| Example 51 | 1.5 | 1.125 | 0 | 0 | 1.125 | 150 | 100 |
| Example 52 | 1.5 | 0 | 0 | 1.125 | 1.125 | 150 | 100 |
| Example 53 | 1.5 | 0 | 0.9 | 0 | 1.35 | 150 | 150 |

**[Table 8]**

| Sample | Viscosity (cP) | Sheet Resistance (Ω/sq) |
|---|---|---|
| Comparative Example 8 | Unable to proceed with Pass | - |
| Comparative Example 9 | Unable to proceed with Pass | - |
| Comparative Example 10 | Unable to proceed with Pass | - |
| Comparative Example 11 | Unable to proceed with Pass | - |
| Comparative Example 12 | Unable to proceed with Pass | - |
| Comparative Example 13 | Unable to proceed with Pass | - |
| Comparative Example 14 | Unable to proceed with Pass | - |
| Example 42 | 65 | 18 |
| Example 43 | 100 | 24 |
| Example 44 | 130 | 17 |
| Example 45 | 220 | 25 |
| Example 46 | 400 | 27 |
| Example 47 | 280 | 18 |
| Example 48 | 410 | 24 |
| Example 49 | 910 | 29 |
| Example 50 | 770 | 18 |
| Example 51 | 1,000 | 23 |
| Example 52 | 1,870 | 29 |
| Example 53 | 700 | 16 |

Referring to Tables 7 and 8 above and referring to Comparative Examples 8 to 10, it was confirmed that when only one type of CMC or one type of conductive polymer was used as a dispersant, the viscosity of the conductive material slurry became excessively high, thus making it impossible to go through with the Pass progress. Referring to Comparative Examples 11 to 14, it was confirmed that even if the conductive polymer and CMC were used as a dispersant, when the graphene content exceeded 2.5 wt%, the viscosity of the conductive material slurry became excessively high, thus making it impossible to go through with the Pass progress.

Examples 42 to 53 are examples when the graphene content is in the range of 0.1 wt% to 1.5 wt%. Referring to the trends of Examples 42 and 43, Examples 44 to 46, Examples 47 and 48, and Examples 49 to 52, respectively, it can be confirmed that the conductive material slurry using CMC having a weight average molecular weight of 100,000 g/mol or less can realize lower viscosity and low sheet resistance of the film, compared to the conductive material slurry using CMC having a different weight average molecular weight.

**[Table 9]**

| Sample (Unit: wt%) | Graphene | CMC¹⁾ | CMC²⁾ | CMC³⁾ | PEDOT:PSS⁴⁾ | Dispersant Ratio (% relative to Graphene) | PEDOT: PSS Ratio (% relative to CMC) |
|---|---|---|---|---|---|---|---|
| Example 54 | 2.5 | 0 | 3.2608 | 0 | 0.4892 | 150 | 15 |
| Example 55 | 2.5 | 0 | 3 | 0 | 0.75 | 150 | 25 |
| Example 56 | 2.5 | 0 | 1.875 | 0 | 1.875 | 150 | 100 |
| Example 57 | 2.5 | 0 | 1.5 | 0 | 2.25 | 150 | 150 |
| Example 58 | 2.5 | 0 | 1.25 | 0 | 2.5 | 150 | 200 |
| Example 59 | 2.5 | 0 | 1.0714 | 0 | 2.6786 | 150 | 250 |
| Example 60 | 2.5 | 0 | 3.125 | 0 | 3.125 | 250 | 100 |
| Example 61 | 2.5 | 0 | 2.5 | 0 | 2.5 | 200 | 100 |
| Example 62 | 2.5 | 0 | 1.25 | 0 | 1.25 | 100 | 100 |
| Example 63 | 2.5 | 0 | 0.625 | 0 | 0.625 | 50 | 100 |
| Example 64 | 2.5 | 3.2608 | 0 | 0 | 0.4892 | 150 | 15 |
| Example 65 | 2.5 | 3 | 0 | 0 | 0.75 | 150 | 25 |
| Example 66 | 2.5 | 1.875 | 0 | 0 | 1.875 | 150 | 100 |
| Example 67 | 2.5 | 1.5 | 0 | 0 | 2.25 | 150 | 150 |
| Example 68 | 2.5 | 1.25 | 0 | 0 | 2.5 | 150 | 200 |
| Example 69 | 2.5 | 1.0714 | 0 | 0 | 2.6786 | 150 | 250 |
| Example 70 | 2.5 | 3.125 | 0 | 0 | 3.125 | 250 | 100 |
| Example 71 | 2.5 | 2.5 | 0 | 0 | 2.5 | 200 | 100 |
| Example 72 | 2.5 | 1.25 | 0 | 0 | 1.25 | 100 | 100 |
| Example 73 | 2.5 | 0.625 | 0 | 0 | 0.625 | 50 | 100 |

**[Table 10]**

| Sample | Viscosity (cP) | Sheet Resistance (Ω/sq) |
|---|---|---|
| Example 54 | 1,330 | 23 |
| Example 55 | 1,100 | 20 |
| Example 56 | 910 | 18 |
| Example 57 | 800 | 16 |
| Example 58 | 760 | 15 |
| Example 59 | 1,430 | 20 |
| Example 60 | 1,450 | 23 |
| Example 61 | 690 | 17 |
| Example 62 | 770 | 18 |
| Example 63 | 1,520 | 19 |
| Example 64 | 1,550 | 27 |
| Example 65 | 1,290 | 25 |
| Example 66 | 1,110 | 22 |
| Example 67 | 1,000 | 20 |
| Example 68 | 910 | 19 |
| Example 69 | 1,890 | 22 |
| Example 70 | 1,770 | 26 |
| Example 71 | 860 | 20 |
| Example 72 | 1,150 | 21 |
| Example 73 | 1,850 | 24 |

Referring to Examples 54 to 59 in Tables 9 and 10 above in which the content of graphene is 2.5 wt% based on the total weight of the conductive material slurry, it can be confirmed that when the weight ratio of CMC having a weight average molecular weight of 100,000 g/mol or less and the conductive polymer (CMC:conductive polymer) is 1:0.25 to 1:2, a low viscosity of the optimized conductive material slurry and a low sheet resistance of the film can be realized.

Referring to Examples 60 to 63 in Tables 9 and 10 above in which CMC having a weight average molecular weight of 100,000 g/mol or less is included, it can be confirmed that as the weight ratio of graphene and the dispersant (graphene:dispersant) approaches closer to 1: 1 to 1: 2, lower viscosity of the optimized conductive material slurry and low sheet resistance of the film can be realized..

Referring to Examples 64 to 69 in Tables 9 and 10 above in which CMC having a weight average molecular weight exceeding 100,000 g/mol and 400,000 g/mol or less is 1:0.25 to 1:2, it can be confirmed that when the weight ratio of CMC having a weight average molecular weight exceeding 100,000 g/mol and 400,000 g/mol or less and the conductive polymer (CMC:conductive polymer) is 1:0.25 to 1:2, the low viscosity of the optimized conductive material slurry and the low sheet resistance of the film can be realized.

Referring to Examples 70 to 73 in Tables 9 and 10 above in which CMC having a weight average molecular weight exceeding 100,000 g/mol and 400,000 g/mol or less is included, it can be confirmed that when the weight ratio of graphene and the dispersant (graphene:dispersant) is in the range of 1: 1 to 1 1:2, the viscosity of the conductive material slurry and the sheet resistance of the film can be lowest.

**[Table 11]**

| Sample (Unit: wt%) | Graphene | CMC¹⁾ | CMC²⁾ | CMC³⁾ | PEDOT:PSS⁴⁾ | Dispersant Ratio (% relative to Graphene) | PEDOT: PSS Ratio (% relative to CMC) |
|---|---|---|---|---|---|---|---|
| Example 74 | 2.5 | 0 | 0 | 3.2608 | 0.4892 | 150 | 15 |
| Example 75 | 2.5 | 0 | 0 | 3 | 0.75 | 150 | 25 |
| Example 76 | 2.5 | 0 | 0 | 1.875 | 1.875 | 150 | 100 |
| Example 77 | 2.5 | 0 | 0 | 1.25 | 2.5 | 150 | 200 |
| Example 78 | 2.5 | 0 | 0 | 1.0714 | 2.6786 | 150 | 250 |
| Example 79 | 2.5 | 0 | 0 | 3.125 | 3.125 | 250 | 100 |
| Example 80 | 2.5 | 0 | 0 | 2.5 | 2.5 | 200 | 100 |
| Example 81 | 2.5 | 0 | 0 | 1.25 | 1.25 | 100 | 100 |
| Example 82 | 2.5 | 0 | 0 | 0.625 | 0.625 | 50 | 100 |

**[Table 12]**

| Sample | Viscosity (cP) | Sheet Resistance (Ω/sq) |
|---|---|---|
| Example 74 | 2,200 | 34 |
| Example 75 | 1,860 | 32 |
| Example 76 | 1,800 | 27 |
| Example 77 | 1,850 | 26 |
| Example 78 | 2,000 | 24 |
| Example 79 | 2,120 | 30 |
| Example 80 | 1,790 | 26 |
| Example 81 | 1,930 | 26 |
| Example 82 | 2,220 | 28 |

Referring to Examples 74 to 82 in Tables 11 and 12 above, it could be confirmed that when CMC having a weight average molecular weight exceeding 400,000 g/mol, the viscosity of the conductive material slurry and the sheet resistance of the film were excessively increased.

Referring to Examples 74 to 78 in Tables 11 and 12 above, it could be confirmed that although the viscosity and sheet resistance were high, as the weight ratio of CMC having a weight average molecular weight exceeding 400,000 g/mol and the conductive polymer (CMC:conductive polymer) approached closer to a range of 1:0.25. to 1:2, it was confirmed that the low viscosity of the conductive material slurry and the low sheet resistance of the film could be realized. Referring to Examples 79 to 82, when the weight ratio of graphene and the dispersant (graphene:dispersant) was in the range of 1:1 to 1:2, the low viscosity of the conductive material slurry and the low sheet resistance of the film could be realized.

Upon review of the trends in Tables 7 to 12 above, it can be inferred that the conductive material slurry using CMC of 400,000 g/mol or less can realize a relatively low viscosity and sheet resistance of the film compared to the conductive material slurry using CMC of a different molecular weight range.

### [Preparation Example 3: Preparation of MWCNT Slurry]

After adding 950 g of distilled water into a round bottom flask, 50 g of CMC was added thereto, and the mixture was stirred at room temperature for 2 hours to prepare a 5 wt% CMC aqueous solution. MWCNT, the CMC aqueous solution, a conductive polymer, and distilled water were added into a beaker and stirred at 1,000 rpm for 60 minutes using a high-speed stirrer to prepare 500 g of a pre-dispersed MWCNT solution. The prepared pre-dispersed MWCNT solution was added into a high-pressure disperser (MN400BF, Micronox), and was subjected to high-pressure dispersion at 700 bar and 5 pass to finally prepare a MWCNT slurry.

**[Table 13]**

| Sample (Unit: wt%) | MWCNT | CMC¹⁾ | CMC²⁾ | CMC³⁾ | PEDOT:PSS⁴⁾ | Dispersant Ratio (% relative to CNT) | PEDOT: PSS Ratio (% relative to CMC) |
|---|---|---|---|---|---|---|---|
| Example 83 | 1 | 0 | 0.75 | 0 | 0.75 | 150 | 100 |
| Example 84 | 2.5 | 0 | 1.875 | 0 | 1.875 | 150 | 100 |
| Example 85 | 2.5 | 0 | 1.5 | 0 | 2.25 | 150 | 150 |
| Example 86 | 2.5 | 0 | 1.25 | 0 | 2.5 | 150 | 200 |
| Example 87 | 2.5 | 0 | 2.5 | 0 | 2.5 | 200 | 100 |
| Example 88 | 2.5 | 0 | 1.25 | 0 | 1.25 | 100 | 100 |

**[Table 14]**

| Sample | Viscosity (cP) | Sheet Resistance (Ω/sq) |
|---|---|---|
| Example 83 | 350 | 50 |
| Example 84 | 750 | 48 |
| Example 85 | 700 | 45 |
| Example 86 | 625 | 43 |
| Example 87 | 700 | 54 |
| Example 88 | 840 | 53 |

Referring to Tables 13 and 14, unlike Tables 1 to 12 above, it could be confirmed that when MWCNT was used as the conductive material, not only the viscosity of the conductive material slurry was excessively increased, but also the sheet resistance was excessively increased.

Although the preferred embodiments of the present disclosure have been described in detail above, the scope of the present disclosure is not limited thereto, and various modifications and improvements by those skilled in the art using the basic concept of the present disclosure defined in the following claims are also present also fall within the scope of the right of the present disclosure.

## Claims

1. A conductive material slurry for a secondary battery electrode comprising a conductive material and a dispersant that disperses the conductive material,
wherein the dispersant comprises a cellulose compound and a conductive polymer; and
wherein the amount of the conductive material exceeds 0 wt% and 2.5 wt% or less based on the total weight of the conductive material slurry for a secondary battery electrode.

2. The conductive material slurry of claim 1, wherein the conductive material is any one selected from the group consisting of graphene, a single-walled carbon nanotube, and a combination thereof.

3. The conductive material slurry of claim 1, wherein the cellulose-based compound is any one selected from the group consisting of cellulose, carboxymethyl cellulose, a sodium salt of carboxymethyl cellulose, hydroxyethyl cellulose, and a potassium salt of carboxymethyl cellulose.

4. The conductive material slurry of claim 1, wherein the conductive polymer is any one selected from the group consisting of a polypyrrole-based compound, a polythiophene-based compound, a polyphenylene sulfide-based compound, and a polyaniline-based compound.

5. The conductive material slurry of claim 1,
wherein the conductive polymer comprises a first ionomer and a second ionomer; and
wherein the first ionomer is different from the second ionomer.

6. The conductive material slurry of claim 5,
wherein the first ionomer is a polymer compound comprising a cyclic molecular structure conjugated with repeating units, and the second ionomer is a polymer compound comprising a cation exchange group.

7. The conductive material slurry of claim 6, wherein the first ionomer is any one selected from the group consisting of a polypyrrole-based compound, a polythiophene-based compound, a polyphenylene sulfide-based compound, and a polyaniline-based compound.

8. The conductive material slurry of claim 6, wherein the cation exchange group is any one selected from the group consisting of a sulfonic acid group, a carboxyl group, a hydroxy group, and a combination thereof.

9. The conductive material slurry of claim 1, wherein the weight ratio of the conductive material and the dispersant (conductive material: dispersant) is 1: 1 to 1:2.

10. The conductive material slurry of claim 1, wherein the cellulose-based compound comprises a first cellulose-based compound having a weight average molecular weight of 400,000 g/mol or less.

11. The conductive material slurry of claim 10, wherein the weight ratio of the first cellulose-based compound and the conductive polymer (first cellulose-based compound: conductive polymer) is 1:0.25 to 1:2.

12. The conductive material slurry of claim 1, wherein the cellulose-based compound comprises a second cellulose-based compound having a weight average molecular weight of 100,000 g/mol or less.

13. The conductive material slurry of claim 12, wherein the weight ratio of the second cellulose-based compound and the conductive polymer (second cellulose-based compound: conductive polymer) is 1:0.25 to 1:2.

14. The conductive material slurry of claim 1, further comprising a solvent to be mixed with the conductive material and the dispersant.

15. A secondary battery electrode, comprising:
an electrode active material;
a conductive material; and
a dispersant,
wherein the dispersant comprises a cellulose-based compound and a conductive polymer; and
wherein the content of the conductive material is 28 wt% or more and 67 wt% or less based on the total weight of the conductive material and the dispersant.

16. The secondary battery electrode of claim 15, wherein the electrode active material is any one selected from the group consisting of natural graphite, artificial graphite, expanded graphite, carbon fiber, carbon black, a carbon nanotube, fullerene, activated carbon, a silicon particle, a silicon oxide, a silicon alloy, a metal compound, a metal-carbon composite, and a lithium-containing nitride.

17. The secondary battery electrode of claim 15, wherein the cellulose-based compound is any one selected from the group consisting of cellulose, carboxymethylcellulose, a sodium salt of carboxymethylcellulose, hydroxyethylcellulose, and a potassium salt of carboxymethylcellulose.

18. The secondary battery electrode of claim 15,
wherein the conductive polymer comprises a first ionomer and a second ionomer, and
wherein the first ionomer is different from the second ionomer.

19. A secondary battery comprising the secondary battery electrode according to claim 15.
